# FASCICULE DE BREVET EUROPEEN

(11) **EP 1 293 087 B1**
(45) Date de publication et mention de la délivrance du brevet: **26.04.2006**
(21) Numéro de dépôt: 01940661.0
(22) Date de dépôt: 31.05.2001
(51) Int. Cl.: H04M 3/527, H04Q 3/00

(54) **SYSTEME D'ACCUEIL TELEPHONIQUE DE CORRESPONDANTS EN CAS D'INDISPONIBILITE D'UN SOUSCRIPTEUR**
SYSTEM FÜR TELEPHONISCHEN GRUSS WÄHREND DER NICHTVERFÜGBARKEIT EINES TEILNEHMERS
TELEPHONE CORRESPONDENT RECEPTION SYSTEM FOR UNAVAILABLE SUBSCRIBER

(30) Priorité: 19.06.2000 FR 0007779
(43) Date de publication de la demande: 19.03.2003
(73) Titulaire: FRANCE TELECOM, 75015 Paris (FR)
(72) Inventeur: FOURNIER, Marc, F-22300 Lannion (FR); CORBEL, Régis, F-22300 Lannion (FR)
(74) Mandataire: Lemoyne, Didier
(86) Numéro de dépôt international: PCT/FR2001/001701
(87) Numéro de publication internationale: WO 2001/099397

(56) Documents cités:
- WO-A-97/20423
- US-A- 5 652 789
- PARKER T: "HIRING A VIRTUAL PHONE ASSISTANT" BUSINESS MARKETING, vol. 82, 1 octobre 1997 (1997-10-01), pages 8-9, XP000198979 CHICAGO, USA ISSN: 0745-5933

## Description

La présente invention concerne un système d'accueil téléphonique de correspondants en cas d'indisponibilité d'un souscripteur.

L'invention trouve une application particulièrement avantageuse dans le domaine des services téléphoniques permettant à un souscripteur en situation d'indisponibilité de pouvoir néanmoins échanger des informations avec des correspondants qui tentent vainement de le joindre.

Actuellement, les correspondants souhaitant contacter des personnes avérées indisponibles ne sont renseignés que lorsqu'un message sonore suffisamment circonstancié a été préalablement enregistré par le biais d'un répondeur téléphonique ou d'une souscription à un service de messagerie vocale.

C'est en pratique peu souvent le cas, car un tel enregistrement est une opération trop longue et trop complexe pour pouvoir être facilement et fréquemment renouvelée, condition pourtant nécessaire à la diffusion d'une information pertinente, fiable, réellement informative de la joignabilité précise du souscripteur et exploitable par les correspondants. En outre, une telle information ne peut être facilement modulée en fonction de l'identité du correspondant puisqu'il faudrait multiplier le nombre de messages, ce qui ne va pas dans le sens recherché d'une plus grande réactivité.

Les services téléphoniques les plus avancés proposés à des souscripteurs sont du type « assistant personnel » qui regroupent des services élémentaires, comme messagerie, répertoire, filtrage, agenda et routage d'appel, dans le but de créer une synergie permettant de simplifier et d'améliorer l'usage de chacun d'eux. Par exemple, en associant un service de messagerie et un répertoire, les messages présentés au souscripteur sont précédés du nom de leur émetteur, rendant ainsi possible, outre l'aspect plus convivial du service, d'effectuer des recherches discriminatoires dans la messagerie simplement en prononçant le nom d'un correspondant présent dans le répertoire.

Parmi ces services téléphoniques connus, on peut citer :
- la localisation du souscripteur qui permet, en associant plusieurs numéros de téléphone, de rechercher le souscripteur selon la fonction « trouvez moi » par exemple « à mon bureau, puis sur mon téléphone mobile, et enfin à mon domicile ».
- la demande de rappel qui permet de proposer au souscripteur le numéro de téléphone appelant véhiculé par le réseau comme numéro de rappel, évitant ainsi le recours à une saisie de numéro par le correspondant.

Toutefois, l'absence de véritable service vocal offert aux correspondants capable de les informer pertinemment en cas d'indisponibilité du souscripteur contribue très négativement à « l'effet répondeur » appliqué à l'identique aux services précités, pourtant présentés comme évolués.

En effet, faute d'information précise et fiable, indispensable pour renseigner les correspondants, et faute de proposer des éléments de service qui laisseraient percevoir immédiatement l'utilité d'un appel en cas d'indisponibilité du souscripteur, le correspondant raccroche le plus souvent dès le début de la diffusion du message sonore stéréotypé.

Le document de brevet US-5652789 décrit un système d'accueil téléphonique similaire à celui défini dans le préambule de la revendication 1. Le système décrit dans le document précité est basé sur l'utilisation d'un agenda électronique adapté à recevoir et gérer des appels entrants vers un souscripteur.

Un objectif de la présente invention est de proposer un système d'accueil téléphonique de correspondants en cas d'indisponibilité d'un souscripteur, qui permettrait de définir un service vocal capable, lorsque le souscripteur est en situation d'indisponibilité avérée, de diffuser à ses correspondants des informations précises et fiables concernant sa joignabilité en indiquant par exemple l'heure et/ou la date de sa prochaine disponibilité, voire le motif de l'indisponibilité.

A cette fin, la présente invention a pour objet un système d'accueil téléphonique de correspondants en cas d'indisponibilité d'un souscripteur, comprenant :
- un serveur de données comprenant au moins un agenda électronique propre au souscripteur,
- une interface d'accès du souscripteur au serveur de données, destinée à consulter et mettre à jour lesdites données,
- un serveur vocal comprenant, au moins, un service d'accueil apte à composer, en relation avec l'agenda électronique, des messages destinés aux correspondants concernant la disponibilité du souscripteur,
- des moyens d'accès des correspondants au serveur vocal.

Selon l'invention, ce système est remarquable en ce que ledit serveur vocal comprend également un service de prise de rendez-vous apte à établir, en relation avec l'agenda électronique du souscripteur, des informations de rendez-vous des correspondants avec le souscripteur.

Cette disposition avantageuse permet aux correspondants, en établissant un dialogue basé sur la reconnaissance vocale en langage naturel avec le service, de formuler une demande de rendez-vous avec le souscripteur caractérisée notamment par une date, une heure et une durée, d'effectuer une vérification dans l'agenda électronique du souscripteur de la compatibilité entre les données de la demande de rendez-vous et la plage horaire correspondante dans l'agenda, de proposer une confirmation du rendez-vous choisi ou, le cas échéant, de proposer une autre plage disponible. Le souscripteur sera informé de ce rendez-vous en consultant son agenda électronique au moyen de son interface d'accès au serveur de données.

Comme on le verra en détail plus loin, le souscripteur peut, au moyen de son interface d'accès, du type graphique sur ordinateur personnel par exemple, noter dans l'agenda électronique du serveur de données les dates, heures et éventuellement les raisons de son indisponibilité (réunion, déplacement, etc.). Cette opération de mise à jour de l'agenda électronique peut également être effectuée vocalement si, comme le prévoit l'invention, ledit système comprend des moyens d'accès du souscripteur au serveur vocal.

Lorsqu'un correspondant cherche à appeler le souscripteur en situation d'indisponibilité, le service d'accueil du serveur vocal compose un message, restitué par synthèse vocale, par lequel le correspondant est informé de manière précise et fiable qu'à cette date et à cette heure le souscripteur n'est pas disponible pour telle raison et qu'il sera de retour à l'heure indiquée dans l'agenda.

Le correspondant a alors plusieurs possibilités. Il peut être invité par le serveur vocal à laisser un message destiné au souscripteur. Dans ce cas, le système, objet de l'invention, comprend également une messagerie vocale.

Si, selon un mode de mise en oeuvre de l'invention, le serveur vocal contient des messages préenregistrés par le souscripteur, alors le correspondant pourra prendre connaissance d'un desdits messages préenregistrés l'informant sur son indisponibilité présente et/ou de sa prochaine disponibilité.

Une autre possibilité consiste en ce que, conformément à l'invention, ledit serveur de données comporte une fonction de routage d'appels destinée à transférer, pendant un intervalle de temps donné, un appel d'un correspondant vers un numéro téléphonique donné. Ceci permet au souscripteur de faire suivre les appels de ses correspondants à un numéro où il pourra être joint. Cette fonction de routage d'appels peut en outre être associée à une fonction de filtrage d'appels permettant au souscripteur d'accepter ou de refuser l'appel présenté, visuellement ou vocalement.

De manière à permettre une modulation des informations en fonction de l'identité des correspondants, il est proposé, selon l'invention, que le serveur de données comprend également un répertoire électronique des correspondants. On comprend que, ledit répertoire électronique étant mis en relation avec le service d'accueil et le service de prise de rendez-vous, il est possible, d'une part, de personnaliser les messages à destination des correspondants par la diffusion d'informations spécifiques déterminées par le souscripteur, et, d'autre part, de réserver certains services, comme le routage d'appels par exemple, à des correspondants désignés, dits prioritaires.

En conclusion, l'intérêt majeur du système de l'invention réside dans l'amélioration de l'efficacité de l'accueil d'un souscripteur indisponible. Ceci doit se mesurer notamment en appréciant la baisse du taux de rappel et le nombre de rendez-vous fixés.

Les informations diffusées sont beaucoup plus fiables que le contenu informationnel de simples messages vocaux ou annonces vocales préenregistrées, comme dans la technique actuelle rappelée ci-dessus, car les moyens d'initialisation de l'information mis à disposition du souscripteur permettent une mise à jour fréquente, rapide, simple, planifiable et non liée à l'infrastructure réseau en particulier.

D'autre part, la prise en charge du correspondant est plus productive, à savoir informative, que celle relevant du seul et peu fréquent dépôt de message vocal car, par la prise de rendez-vous par exemple, le correspondant peut influencer de manière optimale l'activité commerciale d'un souscripteur indisponible.

L'invention améliore du même coup les services d'assistants personnels les plus évolués qui n'utilisent l'agenda que comme élément de stockage d'informations conventionnelles réservées au seul usage du souscripteur, ainsi que les services Web de prise de rendez-vous qui ne mettent à disposition du client du souscripteur qu'une interface de type ordinateur personnel.

La description qui va suivre en regard des dessins annexés, donnés à titre d'exemples non limitatifs, fera bien comprendre en quoi consiste l'invention et comment elle peut être réalisée.

La figure 1 est un schéma montrant une architecture d'un système d'accueil téléphonique conforme à l'invention.

Les figures 2a, 2b, 2c montrent des pages d'écran d'une interface d'accès d'un souscripteur au système de la figure 1.

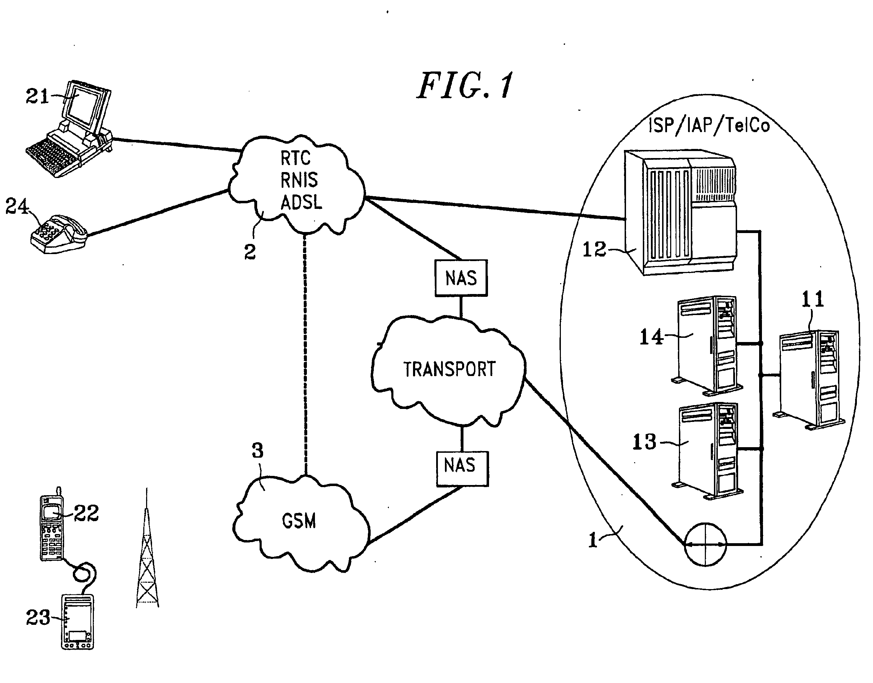

Sur la figure 1 est représenté un système d'accueil téléphonique de correspondants en cas d'indisponibilité d'un souscripteur. Ce système est organisé par exemple sur le réseau 1 d'un fournisseur d'accès Internet ou d'un opérateur de télécommunications et se compose d'un serveur 11 de données et d'un serveur vocal 12 muni de moyens de synthèse vocale à partir d'un texte et de reconnaissance vocale indépendante du locuteur, utilisés respectivement comme procédé de diffusion d'informations mémorisées sous forme textuelle et comme procédé permettant aux correspondants d'intèragir avec le système, notamment lors d'une prise de rendez-vous.

Dans un mode de réalisation de base du système de la figure 1, le serveur 11 de données comprend un agenda électronique propre au souscripteur, tandis que le serveur vocal 12 comprend un service d'accueil apte à composer, en relation avec l'agenda électronique, des messages destinés aux correspondants concernant la disponibilité du souscripteur.

Selon des versions plus avancées du système d'accueil téléphonique conforme à l'invention, le serveur vocal 12 comprend également un service de prise de rendez-vous qui, en relation avec l'agenda électronique situé dans le serveur 11 de données, permet d'établir des informations de rendez-vous des correspondants avec le souscripteur. De même, il est prévu que le serveur 11 de données comprenne un répertoire électronique des correspondants, créé dans le but de personnaliser les services en fonction de l'identité des correspondants.

Il est aussi prévu que le serveur vocal 12 du système de la figure 1 comprenne une messagerie vocale de type conventionnel si l'offre du service de prise de rendez-vous est sans objet dans le cadre de l'activité du souscripteur ou si le correspondant ne souhaite pas laisser de rendez-vous.

Le souscripteur peut accéder directement au serveur 11 de données au moyen d'une interface graphique afin de consulter et mettre à jour son agenda électronique ainsi que le répertoire des correspondants. Cette interface est, par exemple, un ordinateur personnel 21 connecté à un serveur Web 13 du réseau 1 à travers le réseau téléphonique d'accès 2, un téléphone mobile 22 ou un assistant personnel 23 connecté à un serveur WAP 14 du réseau téléphonique commuté 1 à travers le réseau GSM 3. La gestion du serveur 11 de données par le souscripteur peut également être effectuée par l'intermédiaire du serveur vocal 12 au moyen d'un client logiciel embarqué dans l'ordinateur personnel 21, non relié à un serveur Web, mais directement au serveur 11 de données, du téléphone mobile 22 ou d'un téléphone fixe 24. Grâce à cet accès au serveur vocal 12, le souscripteur a la possibilité de consulter, le cas échéant, sa messagerie vocale ou de déposer des messages préenregistrés.

De leur côté, les correspondants accèdent directement au serveur vocal 12 par le biais d'un téléphone mobile 22 ou d'un téléphone fixe 24, et, de là, indirectement au serveur 11 de données, soit pour recevoir des données associées à la disponibilité du souscripteur, soit pour fournir des données associées à un nouveau rendez-vous.

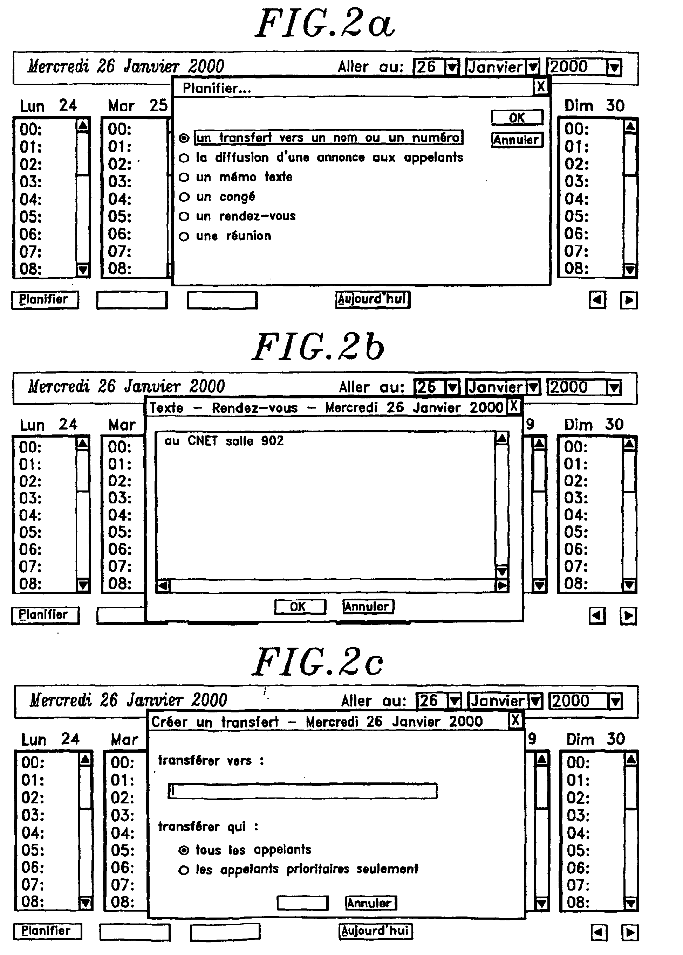

La figure 2a montre une page d'accueil sur l'interface d'accès du souscripteur telle qu'elle peut apparaître sur un ordinateur personnel 21. Grâce à un menu et en relation avec un calendrier indiquant les jours et les plages horaires, il est possible pour le souscripteur de renseigner son agenda électronique en planifiant ses différentes périodes d'indisponibilité avec indication éventuelle du motif. Par exemple, après avoir sélectionné le mercredi 26 janvier 2000 et une plage horaire se terminant à 10 heures, le souscripteur a choisi l'option « Rendez-vous » du menu « Planifier », ce qui fait apparaître la fenêtre « Rendez-vous » à l'écran, comme on peut le voir sur la figure 2b. Le souscripteur peut alors mentionner le motif du rendez-vous, ici le rendez-vous en question a lieu « au CNET salle 902 ».

Un exemple de dialogue entre un correspondant et le système d'accueil téléphonique, objet de l'invention, est le suivant, ceci dans l'hypothèse où le correspondant ne fait pas partie de la liste de ceux pour lesquels un message personnalisé aurait été préenregistré dans le serveur vocal 12.

En réponse à un appel du correspondant, le 26 janvier avant 10 heures, le guide vocal du serveur vocal 12 émet le message d'accueil : « Bonjour, je vais essayer de vous passer <nom_souscripteur> ». Le système transmet alors la requête du serveur vocal 12 vers l'agenda du serveur 11 de données qui renvoie à son tour au serveur 12 l'information selon laquelle le souscripteur est indisponible jusqu'à 10 heures étant en rendez-vous au CNET salle 902. Cette information est fournie au correspondant par synthèse vocale : « Je suis désolé <nom_souscripteur> est en <rendez-vous> au <CNET_en_salle_902> jusqu'à <10 heures>. Je lui signale votre appel ; je peux prendre si vous le souhaitez un message pour lui, dites pour cela Message, ou fixer un rendez-vous, dites pour cela Rendez-vous ».

Correspondant : « Je veux bien prendre un Rendez-vous »

Guide vocal : « D'accord, donnez-moi votre nom »

Correspondant : « Monsieur Jean Dupont »

Guide vocal : « Merci. Quel jour souhaitez-vous le rencontrer ? »

Correspondant : « Mardi prochain »

Guide vocal : « A quelle heure ? »

Correspondant : « vers 17 heures, cela est-il possible ? »

Guide vocal : « Un instant »

La demande de rendez-vous est alors transmise du serveur vocal 12 vers l'agenda électronique en indiquant les données concernant le jour (mardi 1^{er} février 2000) et l'heure (17 heures). Le serveur 11 de données vérifie que le souscripteur est bien disponible à cette date et dans la tranche horaire 17-18 heures. Si c'est le cas, le dialogue avec le correspondant continue de la manière suivante :

Guide vocal : « j'ai noté que <Monsieur Jean Dupont> souhaite un rendez-vous le <mardi 1^{er} février 2000> de <17 heures> à <18 heures>, cela vous convient-il ?

Correspondant : « Oui, tout à fait »

Guide vocal : « D'accord, à bientôt »

Ce nouveau rendez-vous est ensuite définitivement inscrit dans l'agenda électronique du souscripteur, lequel en sera informé à la prochaine consultation de son agenda.

Comme on peut le voir sur la figure 2a, le souscripteur a accès sur son interface graphique à une fonction routage d'appels (première option sur le menu) consistant à transférer, pendant un intervalle de temps donné, un appel d'un correspondant vers un numéro de téléphone donné ou un nom traduit en terme de numéro au moyen du répertoire électronique. Il suffit pour cela de renseigner la fenêtre de transfert de la figure 2c. On notera que cette fonction peut être offerte à l'ensemble des correspondants ou seulement à quelques correspondants prioritaires.

Le menu de la figure 2a permet également (deuxième option) de diffuser aux correspondants appelant une annonce vocale préenregistrée par le souscripteur du type « Je ne suis pas là le Mercredi ». La fonction permettant l'enregistrement nécessaire est proposée au souscripteur lorsqu'il accède au serveur vocal 12.

Le souscripteur peut mettre en oeuvre le système à la réception d'évènements générés par le réseau téléphonique, occupation ou non-réponse de la ligne par exemple. Il est également prévu que le système puisse être activé en permanence à tout moment. Dans ce dernier cas, le correspondant est mis en attente pendant la procédure de présentation de l'appel au souscripteur. En cas d'acceptation de l'appel, le correspondant et le souscripteur sont normalement connectés et le système d'accueil téléphonique est suspendu. En cas de refus du souscripteur de répondre à l'appel du correspondant, le système est mis en service de manière similaire à une situation d'indisponibilité. Si l'agenda téléphonique du souscripteur est vide au moment du refus, un message générique d'indisponibilité (« Je ne suis pas disponible ») est émis à destination du correspondant.

## Revendications

1. Système d'accueil téléphonique de correspondants en cas d'indisponibilité d'un souscripteur, comprenant :
- un serveur (11) de données comprenant, au moins, un agenda électronique propre au souscripteur,
- une interface (21,22,23) d'accès du souscripteur au serveur (11) de données, destinée à consulter et mettre à jour lesdites données,
- un serveur vocal (12) comprenant, au moins, un service d'accueil apte à composer, en relation avec l'agenda électronique, des messages destinés aux correspondants concernant la disponibilité du souscripteur,
- des moyens (22,24) d'accès des correspondante au serveur vocal (12) ; ledit système étant **caractérisé en ce que** ledit serveur vocal (12) comprend également un service de prise de rendez-vous apte à établir, en relation avec l'agenda électronique du souscripteur, des informations de rendez-vous des correspondants avec le souscripteur.

2. Système d'accueil téléphonique selon la revendication 1, **caractérisé en ce que** ledit système comprend des moyens (21,22,24) d'accès du souscripteur au serveur vocal (12).

3. Système d'accueil téléphonique selon la revendication 2, **caractérisé en ce que** le serveur vocal (12) contient des messages préenregistrés par le souscripteur.

4. Système d'accueil téléphonique selon l'une quelconque des revendications 1 à 3, **caractérisé en ce que** le serveur (11) de données comprend également un répertoire électronique des correspondants.

5. Système d'accueil téléphonique selon l'une quelconque des revendications 1 à 4, **caractérisé en ce que** ledit serveur (11) de données comporte une fonction de routage d'appels destinée à transférer, pendant un intervalle de temps donné, un appel d'un correspondant vers un numéro téléphonique donné.

6. Système d'accueil téléphonique selon l'une quelconque des revendications 1 à 5, **caractérisé en ce que** ledit système comprend également une messagerie vocale.

7. Système d'accueil téléphonique selon l'une quelconque des revendications 1 à 6, **caractérisé en ce que** ledit système est mis en oeuvre sur occupation ou sur non-réponse du souscripteur.

8. Système d'accueil téléphonique selon la revendication 7, **caractérisé en ce que** ledit système est également mis en service sur refus du souscripteur de répondre à l'appel d'un correspondant.

9. Système d'accueil téléphonique selon la revendication 8, **caractérisé en ce qu'**un message générique d'indisponibilité est émis si l'agenda électronique du souscripteur est vide au moment du refus.

## Patentansprüche

1. Telefonisches Annahmesystem von Gesprächspartnern im Fall der Nichtverfügbarkeit eines Teilnehmers, das aufweist:
- einen Datenserver (11), der mindestens einen dem Teilnehmer eigenen Terminkalender enthält,
- eine Zugangsschnittstelle (21, 22, 23) des Teilnehmers zum Datenserver (11), die dazu bestimmt ist, die Daten abzufragen und zu aktualisieren,
- einen Sprachserver (12), der mindestens einen Annahmedienst aufweist, der in der Lage ist, in Zusammenhang mit dem elektronischen Terminkalender für die Gesprächspartner bestimmte Mitteilungen zu verfassen, die die Verfügbarkeit des Teilnehmers betreffen,
- Zugangsmittel (22, 24) der Gesprächspartner zum Sprachdienst (12);
wobei das System **dadurch gekennzeichnet ist, dass** der Sprachserver (12) auch einen Terminvereinbarungsdienst aufweist, der in der Lage ist, in Zusammenhang mit dem elektronischen Terminkalender des Teilnehmers Termininformationen der Gesprächspartner mit dem Teilnehmer zu erstellen.

2. Telefonisches Annahmesystem nach Anspruch 1, **dadurch gekennzeichnet, dass** das System Mittel (21, 22, 24) für den Zugang des Teilnehmers zum Sprachserver (12) aufweist.

3. Telefonisches Annahmesystem nach Anspruch 2, **dadurch gekennzeichnet, dass** der Sprachserver (12) vom Teilnehmer vorab aufgezeichnete Mitteilungen enthält.

4. Telefonisches Annahmesystem nach einem der Ansprüche 1 bis 3, **dadurch gekennzeichnet, dass** der Datenserver (11) auch ein elektronisches Adressbuch der Gesprächspartner enthält.

5. Telefonisches Annahmesystem nach einem der Ansprüche 1 bis 4, **dadurch gekennzeichnet, dass** der Datenserver (11) eine Anrufweiterleitungsfunktion aufweist, die dazu bestimmt ist, während eines gegebenen Zeitraums einen Anruf eines Gesprächspartners zu einer gegebenen Telefonnummer weiterzuleiten.

6. Telefonisches Annahmesystem nach einem der Ansprüche 1 bis 5, **dadurch gekennzeichnet, dass** das System auch eine Voice Mail aufweist.

7. Telefonisches Annahmesystem nach einem der Ansprüche 1 bis 6, **dadurch gekennzeichnet, dass** das System eingesetzt wird, wenn der Teilnehmer besetzt ist oder nicht antwortet.

8. Telefonisches Annahmesystem nach Anspruch 7, **dadurch gekennzeichnet, dass** das System auch eingesetzt wird, wenn der Teilnehmer sich weigert, den Anruf eines Gesprächspartners anzunehmen.

9. Telefonisches Annahmesystem nach Anspruch 8, **dadurch gekennzeichnet, dass** eine generische Mitteilung der Nichtverfügbarkeit gesendet wird, wenn der elektronische Terminkalender des Teilnehmers zum Zeitpunkt der Weigerung leer ist.

## Claims

1. Telephone correspondent reception system for greeting other parties in case of unavailability of a subscriber, comprising:
- a data server (11) comprising, at least, an electronic diary specific to the subscriber,
- an interface (21, 22, 23) for subscriber access to the data server (11), which interface is intended to consult and update the said data,
- a voice server (12) comprising, at least, a reception service able to compose, in conjunction with the electronic diary, messages intended for the other parties relating to the availability of the subscriber,
- means (22, 24) of access of the other parties to the voice server (12);
- the said system being **characterized in that** the said voice server (12) also comprises an appointment making service able to establish, in conjunction with the electronic diary of the subscriber, information regarding an appointment of the other parties with the subscriber.

2. Telephone reception system according to Claim 1, **characterized in that** the said system comprises means (21, 22, 24) of subscriber access to the voice server (12).

3. Telephone reception system according to Claim 2, **characterized in that** the voice server (12) contains messages prerecorded by the subscriber.

4. Telephone reception system according to any one of Claims 1 to 3, **characterized in that** the data server (11) also comprises an electronic directory of other parties.

5. Telephone reception system according to any one of Claims 1 to 4, **characterized in that** the said data server (11) comprises a call routing function intended to transfer, during a given time interval, a call from another party to a given telephone number.

6. Telephone reception system according to any one of Claims 1 to 5, **characterized in that** the said system also comprises voice messaging.

7. Telephone reception system according to any one of Claims 1 to 6, **characterized in that** the said system is activated should the subscriber be busy or not respond.

8. Telephone reception system according to Claim 7, **characterized in that** the said system is also activated should the subscriber decline to respond to the call of another party.

9. Telephone reception system according to Claim 8, **characterized in that** a generic message of unavailability is sent if the electronic diary of the subscriber is empty at the time the latter declines.
